(19) Europäisches Patentamt
European Patent Office
Office européen des brevets

(11) **EP 4 641 880 A1**

(12) **EUROPEAN PATENT APPLICATION**

(43) Date of publication:
**29.10.2025 Bulletin 2025/44**

(21) Application number: **25159761.3**

(22) Date of filing: **24.02.2025**

(51) International Patent Classification (IPC):
*H02J 7/00* (2006.01)

(52) Cooperative Patent Classification (CPC):
**H02J 7/00304;** H02J 7/02; H02J 7/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2024 SE 2450295**

(71) Applicant: **Husqvarna AB
561 82 Huskvarna (SE)**

(72) Inventor: **Olsson, Tommy
Huskvarna (SE)**

(54) **A BATTERY CHARGER WITH ADVANCED POWER MANAGEMENT FUNCTIONS**

(57) A control unit (110, 180, 700) for controlling power consumption of a battery charger (100) powered at least partly from an external power source, such as electrical mains, via a cable connection (160),
where the control unit (110, 180, 700) is arranged to obtain data indicative of a current drawn by the battery charger (100) as function of time,
where the control unit (110, 180, 700) is arranged to process the obtained data using at least a first and a second averaging function, where the first averaging function is associated with a shorter averaging time window (Tw1) compared to the second averaging function (Tw2), and where the outputs of the at least two functions are associated with respective function acceptance criteria,
where the control unit (110, 180, 700) is arranged to control power consumption by the battery charger (100) based on outputs of the first and the second averaging functions, and on the respective function acceptance criteria.

FIG. 1

## Description

TECHNICAL FIELD

The present disclosure relates to heavy-duty battery chargers for use at work sites to charge replaceable batteries intended for use in powering construction equipment such as hand-held power tools. There are disclosed battery chargers, methods, and control units for controlling power consumption by the battery chargers.

BACKGROUND

Battery powered heavy-duty construction equipment are becoming more and more common on work sites today. Construction equipment such as power cutters, core drills, compactors, floor saws, and work lights nowadays often comprise battery receptacles for receiving replaceable and rechargeable batteries and are therefore not dependent on an electrical mains connection, which is an advantage. The rechargeable batteries used to power the equipment are replaced by freshly charged batteries as they become depleted.

However, this creates a need for efficient battery chargers capable of charging all the depleted batteries at a work site.

SUMMARY

It is an objective of the present disclosure to provide improved battery chargers. This objective is at least in part obtained by a control unit for controlling power consumption of a battery charger that is powered at least partly from an external power source. The external power source is normally an electrical mains cable connection, but it can also be a cable connection to a genset or the like which provides electrical current to the battery charger. The control unit is arranged to obtain data indicative of a current drawn by the battery charger as function of time and also to process the obtained data using at least a first and a second averaging function. The first averaging function is associated with a shorter averaging time window, i.e., a larger filtering bandwidth, compared to the second averaging function, and the outputs of the at least two functions are associated with respective function acceptance criteria. The control unit is furthermore arranged to control power consumption by the battery charger based on outputs of the first and the second averaging functions, and on the respective function acceptance criteria. By the disclosed techniques, a battery charger may be allowed to temporarily exceed a rated current of a fuse, as long as the long-term current consumption (as indicated by the second averaging function output) over the monitored time period satisfies the long term acceptance criteria. This added freedom in transient power consumption increases the total amount of energy that the battery charger is allowed to draw from the external power source, and thus makes battery charging more efficient. The data indicative of the current drawn by the battery charger may be obtained as a measured current consumption value, or it can be obtained as a current consumption value configured by the control unit as part of a battery charging control operation performed by the control unit. In other words, the control unit may implement a current consumption policing function that makes sure that the acceptance criteria are fulfilled, or it can be implemented as a current controller that determines the current to be drawn by the battery charger at any given point in time. In both cases, the control unit can be arranged to limit a current drawn by the battery charger in case any of the outputs of the averaging functions does not satisfy its acceptance criterion, such that a fuse at the work site is not tripped or such that a genset is not overloaded.

According to some aspects, the control unit comprises a current sensor arranged to measure a current drawn via the electrical mains cable connection. In this case the data indicative of the current drawn by the battery charger is obtained at least in part from the current sensor. This is a reliable way to measure actual current consumption by a machine. The current sensor may form part of a power monitoring function, which can be used by the battery charger to also stabilize a power supply at a work site, as will be discussed in more detail below.

At least one of the first and the second averaging function can be a moving average filter and the acceptance criterion may then comprise a threshold value. At least one of the first and the second averaging function preferably has a low-pass filter characteristic. This means that the control unit implements functions that keep track of the power consumption by the battery charger over different time window lengths and controls the charging operation in dependence thereof. Most fuses allow a higher power consumption compared to some nominal power consumption as long as this higher power consumption does not persist for too long. By the techniques disclosed herein the battery charger is able to exploit this in order to extract additional energy from the external power source, e.g., by drawing pulses of current which exceed a nominal rating of the fuse at the work site. The two or more averaging functions are normally associated with different thresholds, i.e., different acceptance criteria, configured in dependence of the fuse characteristics with which the equipment is intended to operate.

The acceptance criteria, such as the different threshold values, can with advantage be determined in dependence of a construction site fuse setting. This construction site fuse setting may be known a-priori and configured, e.g., by an operator of the battery charger. The fuse configuration at a work site can also be inferred from monitoring the current drawn just prior to a power outage. This way the battery charging operation of the battery charger can be automatically tailored to a given work site, such that battery charging is optimized without tripping fuses or overloading the external power source.

According to some aspects, at least one of the first and the second averaging function is realized by a machine learning (ML) algorithm configured to determine if a respective acceptance criterion is fulfilled based on training data comprising power consumption patterns and power outages for different construction site fuse settings. This approach is a bit more flexible compared to using a moving average function or the like together with a threshold and will sometimes capture more complex patterns in power consumption likely to trip a fuse compared to the averaging functions. However, the approach also adds computational burden, which is a drawback.

The control unit is preferably arranged to gradually limit the (average) current drawn from the external power source according to a pre-determined function in case any of the averaging function outputs does not meet the respective function acceptance criterion. The gradual limitation provides a more graceful degradation in charging performance of the battery charger. The control unit can also be arranged to gradually remove an imposed limitation on the current drawn according to a pre-determined function in case all of the function outputs meet their respective function acceptance criterion. This way abrupt changes in power consumption are avoided, which is an advantage. A power buffer, such as a super-capacitor or an integrated battery, may also be used to even out the charging current provided to the batteries held in the receptacles.

According to some aspects, the control unit is arranged to store a recently drawn current from the external power source in the event of a power outage in a storage medium of the control unit, i.e., in a memory module such as a persistent digital memory module. This way the system can perform a type of diagnostic operation to discover at which magnitude of current the fuse was tripped. The control unit can also be arranged to store recent averaging function outputs in the event of an electrical mains power outage in the storage medium of the control unit, and also to re-configure one or more of the acceptance criteria based on the stored recent function outputs in response to an electrical mains power outage. This is an advantage since the control system can be adapted to better fit the characteristics of the electrical mains at a given construction site.

The control unit is optionally arranged to adjust the function acceptance criteria in dependence of a time of day. This feature is useful if battery charging operations are to be optimized for a given time of day, such as a lunch-break time period at a work site. The battery charger can then be placed in a sort of "back-off" mode in order to spare the fuses, such that an increased battery charging current can be drawn during the lunch break when workers have deposited their batteries in the charger. The can also be arranged to adjust the function acceptance criteria in dependence of a configurable charging time period. An operator of the battery charger can, e.g., configure an increased charging current for a given time period, such as 30 minutes. The battery charger will then draw high current during this time period. The battery charging operation will then slow down after the time period has expired since the fuses will be close to tripping point.

The above-mentioned objective is also at least in part obtained by a battery charger comprising a control unit as discussed above. The battery charger comprises at least one battery receptacle arranged to receive and to temporarily hold a rechargeable battery. The rechargeable battery can be inserted into the receptacle where it is held securely during charging. The battery chargers discussed herein may comprise many different types of battery receptacles, i.e., top-loaded battery cavities, battery cavities loaded from the side, battery through-holes, battery trays, battery bays, and so on. The battery chargers discussed herein normally comprise a plurality of battery receptacles, which allows several batteries to be charged at the same time. The battery charger may comprise any number of battery receptacles, such as five or more receptacles. According to some examples the battery receptacles are sealed compartments accessible via doors or hatches. The batteries being charged are then better protected from the sometimes harsh ambient conditions at the work site.

The battery charger optionally comprises an on-board energy storage device configured to temporarily store electrical energy drawn from the external power source over the cable connection. This on-board energy storage device can be configured as a buffer between the external power source and the one or more batteries being charged by the battery charger. This allows the battery charger to draw power unevenly as function of time, and still provide a consistent and stable charging current to the batteries being charged. The on-board energy storage device can also be used to draw power from the external power source even if no batteries are held in the battery receptacles of the battery chargers. This allows the battery charger to store electrical energy in preparation for receiving a battery, which can then be charged faster than would otherwise be possible. The on-board energy storage device may, e.g., be a capacitor such as a super-capacitor, or a rechargeable battery such as a Li-Ion battery.

Some of the battery chargers disclosed herein comprise a cooling system arranged to control a temperature of the rechargeable batteries held in the one or more battery receptacles. The cooling system may comprise a fan, or a cooling media pump arranged to circulate a cooling media to and from the battery receptacles. The control unit of the battery charger is then arranged to control a temperature of the cooling media in order to maintain a target temperature of the batteries received in the battery receptacles. The control unit may use the cooling to both heat and cool the batteries during charging.

According to some aspects, the control unit is configured to stabilize a frequency of the AC over the power interface by outputting electrical power from the on-board energy storage device on the cable in case of a detected variation in the AC over the power interface. The on-board energy storage device is here used to actively stabilize the AC power supply at a work site, to the benefit of other equipment using the same power source. This way an entire work site can enjoy a stable AC power supply, despite the actual power source being unstable. The control unit may also transfer power between the cable and a battery received in a receptacle in order to stabilize the frequency.

There are also disclosed herein methods and various forms of battery charger associated with the same advantages as discussed above in connection to the control units.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in more detail with reference to the appended drawings, where:

   Figure 1 illustrates an example battery charger;
   Figure 2 shows a rechargeable battery;
   Figures 3A-B show example battery receptacles;
   Figure 4 illustrates example properties of some fuses;
   Figure 5 illustrates an example current consumption by a battery charger;
   Figure 6 is a flow chart illustrating methods;
   Figure 7 schematically illustrates a control unit; and
   Figure 8 schematically illustrates a computer program product;

DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

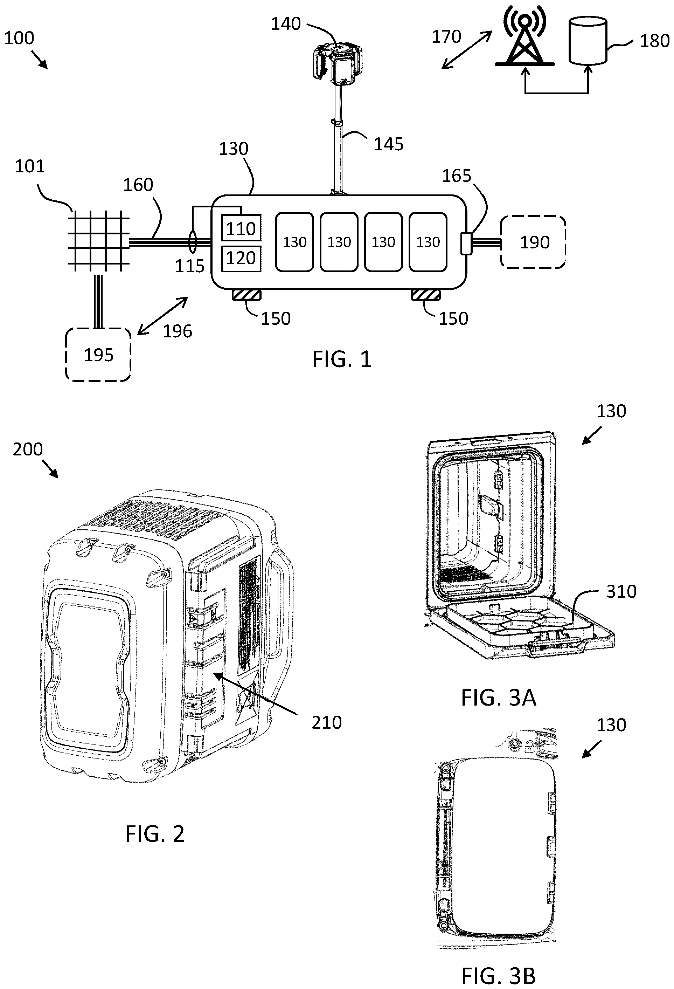

Figure 1 illustrates an example battery charger 100 which comprises battery receptacles 130 for holding rechargeable batteries. The batteries are held in an exchangeable manner in the receptacles 130, which means that the batteries can be inserted and removed from the receptacles without need for first disassembling parts of the battery charger 100, such as parts of the battery charger housing 130. Normally there is also no need for special tools to be used to insert or to remove a rechargeable battery from a receptacle 130. There are often more than one receptacle 130, such as two or more receptacles. Some of the battery chargers disclosed herein may comprise ten receptacles or more.

Figure 2 illustrates an example rechargeable battery 200. The battery 200 comprises electrical connectors 210 arranged to engage corresponding electrical connectors in the battery receptacle 130. This example battery may weigh on the order of 3-5 kgs.

The battery charger 100 exemplified in Figure 1 is connected to an external power source 101 such as electrical mains or a power generator deployed at a work site. Such power generators may comprise internal combustion engine (ICE) generators or fuel-cell stacks. Power is drawn by the battery charger 100 from the external power source 101 via cable 160. The external power source may, e.g., be a one-phase power source or a three-phase power source. Three-phase power sources are commonly used at construction sites.

The battery charger 100 comprises a control unit 110 which controls the general operation of the battery charger 100. The control unit 110 implements power control functions that govern how much power the battery charger 100 draws over the cable 160 at any given point in time, and also how much power that is provided to the different batteries held in the receptacles. Some of the battery chargers 100 disclosed herein comprise voltage-adaptable power interfaces, allowing them to draw power at a configurable voltage level.

According to some aspects, the control unit 110 is also configured to distribute power between two or more batteries held in receptacles 130 of the battery charger 100. The battery charger 100 may then quickly charge a battery by transferring energy from other batteries. This allows battery charging to be completed faster for some batteries. It is normally preferred to have some batteries fully charged and some depleted compared to having all batteries at an intermediate charging level.

An energy buffer 120 is optionally arranged in the battery charger 100. This energy buffer 120 can be used to temporarily hold energy drawn from the external power source before the energy is fed to the one or more batteries held in the battery receptacles 130. The energy buffer can also be used to stabilize the power from the external power source 101, e.g., in case of unwanted frequency variation or voltage variation. This energy buffer will be discussed in more detail below. The energy buffer can be used to provide a more consistent charging current to the one or more batteries held in the receptacles 130.

The battery charger 100 comprises a housing 130 which protects the internal components of the battery charger from being damaged at the work site. The housing 130 may be supported on a ground surface by one or more supports 150 such as rubber feet, two or more wheels, a cylindrical support roller, or the like. The battery charger 100 is often relatively heavy, at least if one or more batteries are held in the battery receptacles 130. Thus, it can be used with advantage as support for an optional work light system 140 as shown in Figure 1, which can also be powered from the batteries held in the receptacles 130, from the energy buffer 120, or from the cable connection 160 to the external power source 101. Consequently, it is appreciated that at least some of the battery chargers disclosed herein comprise integrated work light systems 140. The example work light system 140 in Figure 1 comprises a telescopic mast 145 allowing the work lights to be deployed at a height above the ground surface. The light source may comprise one or more light units. The example in Figure 1 comprises three light units that are pivotable in order to adjust the illuminated area by the light source.

The battery charger 100 furthermore comprises an optional communications module arranged to communicate wirelessly 170 with a remote server 180, e.g., via a base station or access point 170. This allows the battery charger to communicate with a back-end system of the battery charger. Some or all of the functionality in the control unit may be implemented at the remote server 180. The communications module may also be arranged to communicate 196 with one or more external power consumers 195 connected to the same power source 101 as the battery charger 100.

An optional power outlet 165 may be arranged on the battery charger to power one or more external power consumers 190 in a daisy-chain manner. In this case the battery charger 100 draws electrical power over the cable 160 and forwards a part of this electrical power to the external power consumer 190. This way the battery charger is able to control overall power consumption from the external power source 101 by controlling its own power consumption in addition to the power consumption by the external power consumer or consumers. The total power consumption by the battery charger can be determined as the power consumed by the battery charger for operations such as battery charging added to the power provided to the external power consumer 190 via the power outlet 165. The power provided via the power outlet can be regulated using power electronics known in the art. Such aspects will therefore not be discussed in more detail herein.

The control unit 110 may as noted above use the communication module (or some other communications circuit) to communicate wirelessly or via wire with one or more external power consumers 195 connected to the same power source 101 as the battery charger 100. This way the control unit can obtain data related to the power consumption by the external power consumer 195 and thus determine the total load on the power source 101. This way the battery charger is able to adapt its own power consumption in dependence of the power consumption by other power consumers connected to the same power source 101 as the battery charger.

It is known to impose a strict limitation on instantaneous current drawn by equipment such as battery chargers. With a strict limitation on instantaneous current consumption the battery charger 100 will not be allowed to consume more power than the configured power limitation threshold and may thus be used also at construction sites with smaller fuses than the rating of the battery charger. However, this strict limitation on power consumption increases the charging time which is undesired. Instead of imposing a strict limitation of, e.g., 10A or 16A on the maximum current consumption of the battery charger 100, it is proposed herein to instead calculate average current consumptions over different time windows, and associate separate acceptance criteria with each such time window, in dependence of the current fuse configuration at a given work site. This allows for higher power consumption by the battery charger over shorter time windows, as long as the power consumption over a larger time window meets certain acceptance criteria associated with the longer duration time window, thereby increasing the total amount of energy that the battery charger may draw from the external power source 101 over the cable 160.

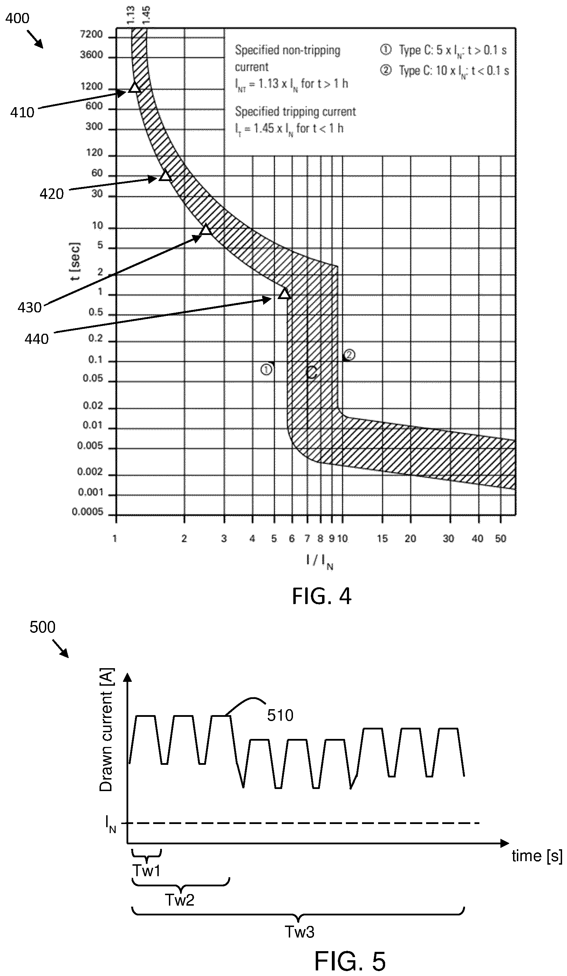

Miniature circuit breakers (MCB) are made according to different tripping characteristics, referred to as an MCB class. MCB classes B, C, D, K and Z will be discussed below in connection to Figure 4. The techniques disclosed herein are, however, not limited to any particular MCB class of fuses.

According to an example of the herein proposed techniques, average current consumptions $\bar{I}_{T_w}$ by the charger 100 are calculated over one or more time windows of different lengths. In other words, a metric such as

$$\bar{I}_{T_w} = \frac{1}{T_w} \int_{t=0}^{t=T_w} i(t)\, dt$$

where $i(t)$ is instantaneous current as function of time t, can be determined for some different time window durations $T_w$, such as 1, 5, 10, 20 and 60 minutes. It is noted that many different types of averages can be calculated, such as weighted averages. The present disclosure is not limited to any particular form of averaging operation or averaging function. Each average value metric will have a different acceptance criterion, such as a threshold value. For example:

$$\bar{I}_{T_{w=1min}} < 1.5\, I_N$$

$$\bar{I}_{T_{w=5min}} < 1.4\, I_N$$

$$\bar{I}_{T_{w=10min}} < 1.3\, I_N$$

$$\bar{I}_{T_{w=20min}} < 1.2\, I_N$$

$$\bar{I}_{T_{w=60min}} < 1.1\, I_N$$

where $I_N$ is the rated current of the fuses at the construction work site. The different average values can then be updated for example every minute or computed as moving averages. If the average current is above the threshold value for some of the time windows, the maximum allowable power consumption by the charger 100 can, for instance, be lowered by 5% or by some other pre-determined value. The test can then be repeated regularly, and the power consumption will therefore go down gracefully over time without tripping the fuses on the work site. If all averages are below their respective thresholds, then the allowable current consumption by the machine 100 can be increased again, preferably according to a graceful function, such as by gradual relative increases. The averaging functions may also comprise elements of prediction, i.e., the output of the functions may be designed so as to represent an estimated future value of an averaging function output, such as an averaging filter output. This can be achieved by implementing, e.g., Kalman filter based on a constant current consumption model, or a constant change current consumption model. Kalman filters are generally known, as are Kalman filter predictors, and will therefore not be discussed in more detail herein.

Figure 5 is a graph 500 illustrating an example current 510 drawn by a battery charger as function of time. The current consumption is uneven and decreases over time. Three time windows Tw1, Tw2 and Tw3 are illustrated. The control unit may compute an average drawn current over these three time windows, and the result of the averaging operation then constitutes the output of three averaging functions. It is appreciated that the graph in Figure 5 is just an example and not to be seen as limiting to the present disclosure. However, most implementations of the herein disclosed techniques will comprise this form of pulsating power consumption. This pulsating power consumption resembles the current drawn by electrical machines as they are started and stopped and is supported by most fuses at construction work sites. By intermittently drawing high power in this manner the amount of energy transferred from the external energy source to the battery charger can be increased. This way the charging time for charging one or more batteries by the battery charger 100 can be decreased, which is an advantage.

The acceptance criteria and the different averaging functions are preferably matched to the tripping characteristics of the MCB in use at the work site. For a class C MCB, with tripping characteristics 400 illustrated in Figure 4, the time periods for averaging and the associated thresholds can be configured as illustrated by the triangles 410, 420, 430, 440 in Figure 4, i.e., spread out along the lower border of the tripping characteristic curve. It is noted that the number of averaging functions used may vary, as well as their location on the x-axis and the y-axis of the tripping characteristic. Note that the current consumption over shorter time windows is significantly larger than the current consumption allowed over longer periods of time. A power consumption limited to a duration of one second is allowed to exceed the nominal power consumption by more than a factor of five. A power consumption limited to a duration of ten seconds may be more than twice as high as the nominal power consumption.

The acceptance criteria need not be associated with a specific type of fuse or the like but can be generally configured by the operator at the work site. The operator can, for instance simply configure a short term current limit and a long term current limit associated with two predetermined time intervals, or according to more advanced embodiments specify a number of time durations with associated average current or power limits. The operator can of course also download a configuration file to the control unit 110 which comprises acceptance criteria to be used for a given work task and/or at a given work site. It may be advantageous to configure current limits in dependence of a nominal rated current $I_N$. An operator can, for instance, manually configure a number of time periods $T_i$ in seconds or minutes, where $i = 1, 2, ...\ N$ with associated average current thresholds $x_i\, I_N$ defined as multiples of a nominal rated current $I_N$, as exemplified below for three configured time periods with associated acceptance criteria.

$$\bar{I}_{T_{w=T_1}} < x_1\, I_N$$

$$\bar{I}_{T_{w=T_2}} < x_2\, I_N$$

$$\bar{I}_{T_{w=T_3}} < x_3\, I_N$$

The fuse tripping characteristics exemplified in Figure 4 are generally known as a trip curve. The characteristics shown in Figure 4 is a class C trip curve and is included herein for illustrative purposes only. The x-axis shows multiple of rated current $I_N$ and the y-axis shows time in seconds. MCBs are generally available with class B, C, D, K and Z trip curve characteristics. An MCB with class B trip characteristics trips when the current flowing through it reaches between 3 to 5 times rated current. These MCBs are suitable for cable protection. MCBs with class C trip characteristics trips more or less instantaneously when the current flowing through it reaches between 5 to 10 times the rated current. MCBs with class C characteristics are commonly found in domestic and residential sites where they are used for electromagnetic starting loads with medium starting currents. An MCB with class D trip characteristics trips when the current flowing through it reaches above 10 to 20 times the rated current. Class D MCBs are suitable for inductive and motor loads with high starting currents. Class K MCBs trip when the current flowing through it reaches between 8 to 12 times the rated current. They are suitable for inductive loads and motor loads with high inrush currents. Class Z MCBs are used with highly sensitive devices such as semiconductor devices and are almost never found at construction sites. Hence, it is appreciated that acceptance criteria for current consumption over different time periods is advantageously configured differently. A short burst of high current (e.g., at five times the rated current $I_N$) drawn by the machine will most likely not trip a class C MCB as long as the burst is limited to a time duration below one second or so. The same fuse will be tripped if a current at two times the rated current $I_N$ is drawn for two minutes or so. Hence, it is understood that the acceptance criteria for each averaging function can be configured in dependence of a class of an MCB installation at a work site. This MCB data can, for instance, be downloaded from the server 180, or be configured manually by an operator of the battery charger 100.

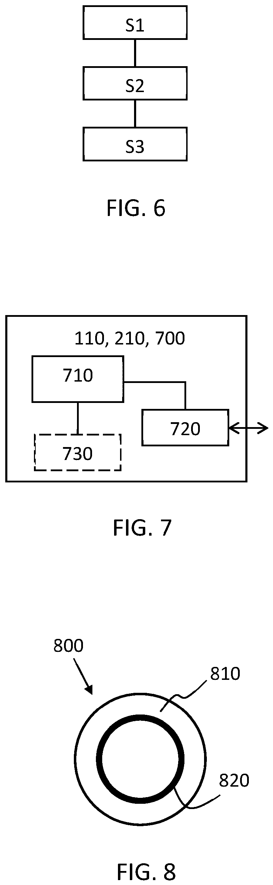

With reference also to Figure 7, there is disclosed herein a control unit 110, 180, 700 for controlling power consumption of a battery charger 100 that is powered at least partly from an external power source, such as electrical mains or a generator, via a cable connection 160. The control unit may be a control unit 110 arranged integrated with the battery charger as schematically illustrated in Figure 1, or a control unit arranged remote from the battery charger 100, e.g., in a remote server 180. The control unit 110, 180, 700 is arranged to obtain data indicative of a current drawn by the battery charger 100 as function of time, and to process the obtained data using at least a first and a second averaging function. The control unit is arranged to obtain data indicative of a current drawn by the battery charger 100 as function of time, either continuously, periodically, or in response to some event or trigger signal. The control unit may for instance comprise or be connectable to a current sensor arranged to measure a current drawn via an electrical mains cable connection 160, in which case the data indicative of the current drawn by the battery charger 100 is obtained at least in part from the current sensor. In this way the actual current consumption can be closely monitored, which is an advantage since more accurate current data is obtained. The control unit 110 may also directly control the power consumption by the battery charger by controlling the charging operation, in which case the controlled target power consumption value may constitute or at least form part of the obtained data.

It is noted that the data indicative of the current drawn by the battery charger 100 as function of time comprises electrical current drawn by the battery charger itself to, e.g., charge batteries, power the work light 140, and so on. However, the current drawn by the battery charger may also comprise current provided to external power consumers via the power outlet 165 discussed above. In other words, the control unit 110 may be arranged to control the power consumption by the battery charger 100 at least in part by controlling electrical power provided via a power outlet 165 of the battery charger 100.

According to some aspects, the control unit 110 is configured to communicate 196 with other external power consumers 195 connected to the same external power source 101 as the battery charger 100. In this case the data indicative of the current drawn by the battery charger 100 as function of time may be adjusted to account for the current drawn by the other external power consumers connected to the same power source. This means that the control unit can be arranged to control the power consumption by the battery charger 100 at least in part based on data related to a power consumption by an external power consumer 195 connected to the same power source 101 as the battery charger 100.

The first averaging function is associated with a shorter averaging time window Tw1 compared to the second averaging function Tw2, and where the outputs of the at least two functions are associated with respective function acceptance criteria. The term "averaging function" is to be construed broadly herein, to encompass any two operations of different time constants or filtering bandwidths, as discussed in more detail below. An averaging filter is an example of an averaging function, since a filter is a type of function taking an input and generating an output. A shorter averaging time window function or filter can also be said to have a larger filtering bandwidth, or to let faster changes in a filter signal through with less attenuation compared to a smaller filtering bandwidth filter. An acceptance criterion is, generally, some form of test which determines if the output of the function is acceptable, or if some action to reduce current consumption is required. The shorter averaging time window function is normally associated with a more relaxed acceptance criteria compared to the longer averaging time window function, i.e., higher power consumption and drawn current is allowed as long as this higher power consumption is of limited time duration, as discussed above. A threshold value can be used as acceptance criteria, as discussed above, in which case the output of each function is continuously or at least periodically checked against the respective threshold, in order to determine if the output satisfies the acceptance criteria of the function or not. The thresholds can advantageously be determined in dependence of construction site fuse setting, i.e., as a factor multiplied with the fuse rated current, as exemplified above.

An averaging function is to be interpreted broadly herein to comprise any function or filter predominantly having a low-pass filter characteristic which suppresses fast variation (where fast is defined relative to the averaging time window). An averaging operation determined for a given time window is the output of an averaging function, and so is the output of a moving average filter. A function or filter having a forgetting factor $w \ll 1$, i.e., a filter which outputs a result $\bar{I}_{k+1}$ according to

$$\bar{I}_{k+1} = (1 - w)\bar{I}_k + w(i_k - \bar{I}_k)$$

where k is a time index, and $i_k$ is a current drawn by the machine at time index k, is also a form of averaging function, with an averaging time window determined by the magnitude of w.

The control unit 110, 180, 700 is also arranged to control power consumption by the battery charger 100 based on outputs of the first and the second averaging functions, and on the respective function acceptance criteria. According to some aspects, the control unit is arranged to limit a current drawn by the battery charger 100 in case any of the outputs of the averaging functions does not satisfy its acceptance criterion.

It may be desired to optimize battery charging performance during certain time periods, such as just after the end of a work shift or during a lunch break, when many batteries can be expected to need recharging. The control unit 110, 180, 700 can then be arranged to adjust the function acceptance criteria in dependence of a time of day, so as to spare the fuses at the work site in preparation for an upcoming increased battery charging current. The fuses will then be cool and ready to be more heavily loaded when the time period for optimized charging commences. This can be implemented by adjusting the acceptance criteria to be lower for the longer time periods, e.g., on the order of 10-60 minutes or so, just before the period for optimized battery charging begins. The control unit 110, 180, 700 can also be arranged to adjust the function acceptance criteria in dependence of a configurable charging time period. This means that the battery charger increases the acceptance criteria to allow higher than normal charging current for a given time period, say for the next 30 minutes or so. This will of course mean that battery charging after the time period becomes slower, but this type of speed-charging may be desired in some cases.

Figure 6 shows a flow chart which summarizes some of the concepts discussed herein. There is disclosed a method for controlling power consumption of a battery charger 100 powered at least partly from an external power source, such as electrical mains, via a cable connection 160. The method comprises obtaining S1 data indicative of a current drawn by the battery charger 100 as function of time, processing S2 the obtained data using at least a first and a second averaging function, where the first averaging function is associated with a shorter averaging time window Tw1 compared to the second averaging function Tw2, and where the outputs of the at least two functions are associated with respective function acceptance criteria, and controlling S3 power consumption by the battery charger 100 based on outputs of the first and the second averaging functions, and on the respective function acceptance criteria.

The battery chargers discussed herein are stand-alone battery chargers, intended for charging batteries and not for performing construction work tasks such as cutting or demolishing objects at a work site. A battery charger according to the present disclosure is not a hybrid power supply system comprised in construction equipment such as a demolition robot or the like.

According to some aspects, at least one of the first and the second averaging function is realized by a machine learning (ML) algorithm, or an algorithm based on artificial intelligence, such as a random forest method or a neural network, configured to determine if a respective acceptance criterion is fulfilled based on training data comprising power consumption patterns and power outages for different construction site fuse settings. In this case a data set of current consumption for various machines which tripped a given fuse and a data set of current consumption which did not trip the given fuse is used to train the ML structure into outputting a result which indicates if the current operation of the equipment meets the acceptance criteria of the first and second functions, or if one or more acceptance criterions have been breached. The ML structure is advantageously trained for different MCB classes, such that the ML structure can be configured in dependence of a work site MCB class. To train an ML structure in this manner, real world data on time-stamped current consumption can be collected for different battery chargers 100, along with time instants where a fuse was tripped. The data can be collected for different MCB classes, and the ML structure can then be configured to output information related to whether the acceptance criteria are fulfilled or not. The control unit can then use the output of the ML structure to adjust the power consumption of the battery charger 100 to suit a given fuse installation.

The control unit 110, 700 is preferably arranged to gradually limit the current drawn according to a predetermined function in case any of the function outputs does not meet the respective function acceptance criterion, as well as to gradually remove an imposed limitation on the current drawn according to a pre-determined function in case all of the function outputs meet the respective function acceptance criterion. The power consumption by the battery charger 100 is, in most cases, of a pulsating nature, as discussed above in connection to Figure 5. This pulsating pattern will be adjusted by the control unit over time so as to not trip the fuse at the work site.

If a power outage should be experienced despite the current limiting operations performed by the control unit 110, i.e., if a fuse is tripped despite the actions of the control unit 110 discussed herein, it may be advantageous to reconfigure the acceptance criteria in order to be better suited for a given work site and/or work task. Towards this end, the control unit 110, 700 can be arranged to store a recently drawn current in the event of an electrical mains power outage in a storage medium 730 of the control unit. A user can then access the memory and discover at which current the fuse was tripped. This information may allow the user or some form of automatic control system to reconfigure the acceptance criteria to be more suited to a given work site.

The control unit 110, 700 may also be arranged to store recent function outputs in the event of an electrical mains power outage in a storage medium 730 of the control unit, and optionally also to re-configure one or more of the acceptance criteria based on the stored recent function outputs in response to an electrical mains power outage. This information may advantageously be displayed in the remote control, e.g., by the display 230.

Indeed, the current fusing at a work site may not be known a-priori, and this feature allows fuse information of a work site to be discerned in an efficient manner. A power outage event may also be communicated to the server 180, along with the averaging function data and/or a time record of instantaneous current drawn by the machine 100. This data can then be used for analysis at the remote server 180, and also for fine-tuning the ML structure discussed above.

According to some aspects, the battery charger 100 comprises an electrical power sensor 115. This power sensor 115 is arranged to monitor an alternating current (AC) from the external power source 101, and to determine frequency and/or amplitude characteristics of the AC. In this case the control unit 110 can be arranged to detect a time variation in frequency and/or amplitude of the AC in relation to a nominal frequency and/or amplitude based on the determined characteristics and stabilize a frequency and/or amplitude of the AC over the power interface 120 by transferring electrical power between the cable 160 and the on-board energy storage device 120 and/or between the cable 160 and a battery received in a battery receptacle 130, in case of a detected variation in the AC over the power interface 120.

In this case the battery charger 100 acts as a power stabilizer, which provides a more stable power supply at a work site, to the benefit of other construction equipment used at the work site. To stabilize the frequency of the AC from the external power source 101, the battery charger 100 can draw power from the on-board energy storage device 120 and/or from one or more batteries held in the receptacles 130 and output this power onto the cable 160. This reduces the load on the external power source 101, which may then be able to provide the desired AC amplitude and frequency. The output power should be frequency locked to the AC frequency of the power source so as to not cause further frequency instability. It is most common to stabilize frequency by outputting power from the on-board energy storage device 120 to the power interface. However, in some cases it may also be possible to stabilize frequency by transferring power from the power interface to the on-board energy storage device 120, e.g., in case of a power surge on the power interface. The on-board energy storage device 120 of the battery charger 100 may, e.g., be a capacitor or an internal rechargeable battery.

Figures 3A-B illustrate some example battery receptacles 130. Figure 3A shows a battery compartment comprising a door or hatch 310. In this case the battery is held in a closed volume during charging, where the battery is protected from, e.g., moisture and dirt at the work site. The battery is also protected from mechanical damage by objects at the work site, such as heavy falling objects and the like, which may damage the battery. Figure 3B shows a through-hole battery receptacle. This receptacle is open at two opposing ends, allowing a battery to protrude a distance from the receptacle.

According to some aspects, the battery charger 100 comprises a cooling system arranged to control a temperature of the rechargeable batteries held in the one or more battery receptacles. The cooling system may comprise a fan arranged to generate a flow of cooling air. The cooling system may also comprise a liquid circuit where cooling media is circulated to and from the receptacles and a heat exchanger.

The control unit may use this liquid cooling circuit to both heat and to cool the batteries held in the receptacles.

Figure 7 schematically illustrates, in terms of a number of functional units, the general components of the control unit 700, such as the control units 110, 180 discussed above. Processing circuitry 710 is provided using any combination of one or more of a suitable central processing unit CPU, multiprocessor, microcontroller, digital signal processor DSP, etc., capable of executing software instructions stored in a computer program product, e.g., in the form of a storage medium 730. The processing circuitry 710 may further be provided as at least one application specific integrated circuit ASIC, or field programmable gate array FPGA.

Particularly, the processing circuitry 710 is configured to cause the battery charger 100 to perform a set of operations, or steps, such as the methods discussed in connection to Figure 6 and the discussions above. For example, the storage medium 730 may store the set of operations, and the processing circuitry 710 may be configured to retrieve the set of operations from the storage medium 730 to cause the device to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 700 may further comprise an interface 720 for communications with at least one external device. As such the interface 720 may comprise one or more transmitters and receivers, comprising analogue and digital components and a suitable number of ports for wireline or wireless communication.

The processing circuitry 710 controls the general operation of the control unit 700, e.g., by sending data and control signals to the interface 720 and the storage medium 730, by receiving data and reports from the interface 720, and by retrieving data and instructions from the storage medium 730.

Figure 8 illustrates a computer readable medium 810 carrying a computer program comprising program code means 820 for performing the methods illustrated in Figure 6, when said program product is run on a computer. The computer readable medium and the code means may together form a computer program product 800.

**Claims**

1. A control unit (110, 180, 700) for controlling power consumption of a battery charger (100) powered at least partly from an external power source, such as electrical mains, via a cable connection (160),

   where the control unit (110, 180, 700) is arranged to obtain data indicative of a current drawn by the battery charger (100) as function of time,
   where the control unit (110, 180, 700) is arranged to process the obtained data using at least a first and a second averaging function, where the first averaging function is associated with a shorter averaging time window (Tw1) compared to the second averaging function which is associated with a longer averaging time window (Tw2), and where the outputs of the at least two functions are associated with respective function acceptance criteria,
   where the control unit (110, 180, 700) is arranged to control power consumption by at least the battery charger (100) based on outputs of the first and the second averaging functions, and on the respective function acceptance criteria.

2. The control unit (110, 180, 700) according to claim 1, where the control unit is arranged to limit a current drawn by the battery charger (100) in case any of the outputs of the averaging functions does not satisfy its acceptance criterion.

3. The control unit (110, 180, 700) according to any previous claim, comprising a current sensor arranged to measure a current drawn via the cable connection (160), where the data indicative of the current drawn by the battery charger (100) is obtained at least in part from the current sensor.

4. The control unit (110, 180, 700) according to any previous claim, where at least one of the first and the second averaging function is a moving average filter and where the acceptance criterion comprises a threshold value, wherein the threshold value is preferably determined in dependence of a construction site fuse setting.

5. The control unit (110, 180, 700) according to any previous claim, where at least one of the first and the second averaging function has a low-pass filter characteristic, and where the acceptance criterion comprises a threshold value, and wherein the threshold value is preferably determined in dependence of a construction site fuse setting.

6. The control unit (110, 180, 700) according to any previous claim, arranged to gradually limit the current drawn according to a pre-determined function in case any of the averaging function outputs does not meet the respective function acceptance criterion.

7. The control unit (110, 180, 700) according to any previous claim, arranged to gradually remove an imposed limitation on the current drawn according to a pre-determined function in case all of the averaging function outputs meet the respective function acceptance criterion.

8. The control unit (110, 180, 700) according to any previous claim, arranged to store recent averaging function outputs in the event of a power outage in a storage medium (730) of the control unit.

9. The control unit (110, 180, 700) according to claim 8, arranged to re-configure one or more of the acceptance criteria based on the stored recent averaging function outputs in response to a power outage.

10. The control unit (110, 180, 700) according to any previous claim, arranged to control the power consumption by the battery charger (100) at least in part by controlling an amount of electrical power provided via a power outlet (165) of the battery charger (100).

11. The control unit (110, 180, 700) according to any previous claim, arranged to control the power consumption by the battery charger (100) at least in part based on data related to a power consumption by an external power consumer (195) connected to the same power source (101) as the battery charger (100).

12. A battery charger (100) comprising a control unit (110) according to any previous claim and at least one battery receptacle (130) arranged to receive and to temporarily hold a rechargeable battery (200).

13. The battery charger (100) according to claim 12, comprising an on-board energy storage device (120) configured to temporarily store electrical energy drawn from the external power source over the cable connection (160), wherein the onboard energy storage device (120) is preferably a capacitor or a rechargeable battery.

14. The battery charger (100) according to claim 12 or 13, comprising an electrical power sensor (115), where the power sensor (115) is arranged to monitor an alternating current, AC, from the external power source, and to determine frequency and/or amplitude characteristics of the AC,

> where the control unit (110) is arranged to detect a time variation in frequency and/or amplitude of the AC in relation to a nominal frequency and/or amplitude based on the determined characteristics, and
> where the control unit (110) is configured to stabilize a frequency and/or amplitude of the AC over the power interface (120) by transferring electrical power between the cable (160) and the on-board energy storage device (120) and/or between the cable (160) and a battery received in a battery receptacle (130), in case of a detected variation in the AC over the power interface (120).

15. The battery charger (100) according to any of claims 12-14, comprising a communications module configured to communicate (196) with one or more external power consumers (195) connected to the same external power source (101) as the battery charger (100).

16. A method for controlling power consumption of a battery charger (100) powered at least partly from an external power source, such as electrical mains, via a cable connection (160), the method comprising

> obtaining (S1) data indicative of a current drawn by the battery charger (100) as function of time,
> processing (S2) the obtained data using at least a first and a second averaging function, where the first averaging function is associated with a shorter averaging time window (Tw1) compared to the second averaging function (Tw2), and where the outputs of the at least two functions are associated with respective function acceptance criteria, and
controlling (S3) power consumption by the battery charger (100) based on outputs of the first and the second averaging functions, and on the respective function acceptance criteria.

FIG. 1

FIG. 2

FIG. 3A

FIG. 3B

FIG. 4

FIG. 5

S1

S2

S3

FIG. 6

110, 210, 700

710

720

730

FIG. 7

800

810

820

FIG. 8

Europäisches
Patentamt

European
Patent Office

Office européen
des brevets

# EUROPEAN SEARCH REPORT

**Application Number**

EP 25 15 9761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/185248 A1 (AOSHIMA YOSHINORI [JP] ET AL) 30 June 2016 (2016-06-30) * paragraphs [0037] - [0060]; figures 1,2,6 * | 1-16 | INV. H02J7/00 |
| A | CN 110 447 156 B (HITACHI AUTOMOTIVE SYSTEMS LTD) 16 January 2024 (2024-01-16) * claim 1; figure 1 * | 1-16 | |
| A | US 2013/227319 A1 (YE MAO [US] ET AL) 29 August 2013 (2013-08-29) * paragraphs [0034] - [0040]; figures 1,3 * | 1-16 | |

**TECHNICAL FIELDS
SEARCHED (IPC)**

H02J

The present search report has been drawn up for all claims

| Place of search | Date of completion of the search | Examiner |
|---|---|---|
| Munich | 18 September 2025 | Grosse, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 9761

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | Publication date | Patent family member(s) | | Publication date |
|---|---|---|---|---|
| US 2016185248 A1 | 30-06-2016 | CN | 105453374 A | 30-03-2016 |
| | | EP | 3032690 A1 | 15-06-2016 |
| | | JP | 6171127 B2 | 02-08-2017 |
| | | JP | WO2015019873 A1 | 02-03-2017 |
| | | MX | 353626 B | 09-01-2018 |
| | | MY | 184261 A | 29-03-2021 |
| | | RU | 2627239 C1 | 04-08-2017 |
| | | US | 2016185248 A1 | 30-06-2016 |
| | | WO | 2015019873 A1 | 12-02-2015 |
| CN 110447156 B | 16-01-2024 | CN | 110447156 A | 12-11-2019 |
| | | EP | 3605779 A1 | 05-02-2020 |
| | | JP | 6863795 B2 | 21-04-2021 |
| | | JP | 2018170167 A | 01-11-2018 |
| | | US | 2019207406 A1 | 04-07-2019 |
| | | WO | 2018179854 A1 | 04-10-2018 |
| US 2013227319 A1 | 29-08-2013 | CN | 104137022 A | 05-11-2014 |
| | | EP | 2791755 A1 | 22-10-2014 |
| | | KR | 20140133880 A | 20-11-2014 |
| | | TW | 201351116 A | 16-12-2013 |
| | | US | 2013227319 A1 | 29-08-2013 |
| | | WO | 2013130340 A1 | 06-09-2013 |

EPO FORM P0459

For more details about this annex : see Official Journal of the European Patent Office, No. 12/82